# EUROPÄISCHE PATENTANMELDUNG

(11) **EP 0 807 805 A2**
(43) Veröffentlichungstag der Anmeldung: **19.11.1997**
(21) Anmeldenummer: 97107612.0
(22) Anmeldetag: 09.05.1997
(51) Int. Cl.: G01G 23/01

(54) **Verfahren zum Kalibrieren einer Waage**

(30) Priorität: 17.05.1996 DE 19619854
(71) Anmelder: SOEHNLE-WAAGEN GMBH + CO., 71540 Murrhardt (DE)
(72) Erfinder: Schurr, Michael, Dipl.-Ing. (FH), 71540 Murrhardt (DE)
(74) Vertreter: Fuhlendorf, Jörn, Dipl.-Ing.

(57) **Zusammenfassung**

Die Erfindung betrifft ein Verfahren zum Kalibrieren einer ein gewichtskraftbestimmendes Wägesystem (4) aufweisenden Waage (2) mit einem prozessorgesteuerten Rechner (12) und mit einer Speichereinheit (14) zum Speichern von die Erdbeschleunigung (g) betreffenden Informationen; das Verfahren wird dahingehend verbessert, daß es an einem beliebigen Ort durchführbar ist, ohne daß die Möglichkeit besteht, bestimmungswidrige Manipulationen durchzuführen. Erfindungsgemäß weist das Verfahren folgende Schritte auf: Übermitteln von den Aufstellungs- bzw. Betriebsort der Waage (2) betreffenden Daten über das drahtgebundene oder drahtlose Telefonnetz (22) von dem Aufstellungs- bzw. Betriebsort zu einem Empfangsort; Bestimmen von dem Aufstellungs- oder Betriebsort zugeordneten Informationen über den Wert der Erdbeschleunigung am Aufstellungs- oder Betriebsort der Waage (2) anhand der empfangenen Daten am Empfangsort; Ansteuern der über eine serielle Schnittstelle (18) und ein Modem (20) am Aufstellungs- oder Betriebsort an das Telefonnetz (22) angeschlossenen Waage über das Telefonnetz und Übermitteln der bestimmten Informationen vom Empfangsort an den Rechner (12) der Waage (2) am Aufstellungs- bzw. Betriebsort, wo sie in der Speichereinheit (14) gespeichert werden.

## Beschreibung

Die Erfindung betrifft ein Verfahren zum Kalibrieren einer ein gewichtskraftbestimmendes Wägesystem aufweisenden Waage mit einem prozessorgesteuerten Rechner und mit einer Speichereinheit zum Speichern von die Erdbeschleunigung (g) betreffenden Informationen.

Bei Waagen mit einem Gewichtskraft bestimmenden Wägesystem, bei denen die Masse eines Gegenstands über seine durch die Erdbeschleunigung hervorgerufene Gewichtskraft und deren Wirkung auf einen Sensor bestimmt wird, tritt als grundsätzliches Problem die Abhängigkeit des Werts der Erdbeschleunigung vom Aufstellungs- bzw. Betriebsort der Waage auf. So variiert der Wert der Erdbeschleunigung innerhalb der Ausdehnung der Europäischen Gemeinschaft von etwa 70° bis 35° nördlicher Breite zwischen 9,797 und 9,825 m/s². Der Wert der Erdbeschleunigung wird weiterhin von dem Abstand des Aufstellungs- oder Betriebsorts der Waage von der Meereshöhe bzw. normal Null (NN) beeinflußt. Diese Einflußgröße ist jedoch von geringerer Bedeutung; sie wird häufig vernachlässigt oder rechnerisch durch das Produkt eines von der nördlichen Breite des Aufstellungsorts abhängigen Korrekturfaktors und der Höhe über NN berücksichtigt.

Dem genannten Problem kann dadurch begegnet werden, daß entweder der Aufstellungsort der Waage ermittelt und daraus die lokale Erdbeschleunigung errechnet oder einem Speicher bzw. einer Datenbank entnommen wird, oder die Waage wird direkt am Aufstellungsort mit Gewichten kalibriert. Der ermittelte Wert der Erdbeschleunigung wird in der Speichereinheit der Waage gespeichert und bei der Massenbestimmung im Betrieb der Waage entsprechend verarbeitet.

Mit der DE 44 08 232 A1 ist bereits vorgeschlagen worden, in einer waageninternen Korrekturvorrichtung eine Satellitensignalempfangsschaltung vorzusehen, welche anhand von empfangenen Satellitensignalen geographische Positionsdaten ermittelt und der rechnergesteuerten Korrekturvorrichtung zur Verfügung stellt, welche dann einen Korrekturwert berechnet und ein auf der Basis des Korrekturwerts korrigiertes Wägeergebnis zur Anzeige bringt. Für die Positionsbestimmung über das sogenannte GPS (Global Positioning System) ist ein fehlerfreier Empfang der Signale von mindestens vier Satelliten erforderlich, was bedeutet, daß zu diesen vier Satelliten eine direkte Sichtverbindung hergestellt werden muß. Reflexionen, d.h. Mehrwegeempfang, durch Berge oder Häuser können den Empfang verschlechtern und sogar unmöglich machen. Es ist nahezu unmöglich, innerhalb von Häuserschluchten eine ordnungsgemäße Kalibrierung von Waagen durchzuführen. Ein weiterer Nachteil des bekannten Systems ist darin zu sehen, daß aufgrund des Zeittakts, mit dem GPS-Signale derzeit gesendet werden, selbst bei freier Sicht auf die Satelliten 12,5 min erforderlich sind, um die Ortsinformationen ermitteln zu können. Die Herstellung der Waage wird durch Einbau eines GPS-Systems nicht unerheblich verteuert.

Der vorliegenden Erfindung liegt daher die Aufgabe zugrunde, ein Verfahren zum Kalibrieren einer Waage der eingangs erwähnten Art anzugeben, bei welchem die vorstehend erwähnten Nachteile nicht auftreten und Bedienungsfehler weitestgehend eliminiert werden können. Desweiteren soll nicht die Möglichkeit gegeben sein, beim Nachkalibrieren in bestimmungswidriger Weise Manipulationen vornehmen zu können, die einen Einfluß auf den Wert der Erdbeschleunigung haben.

Diese Aufgabe wird erfindungsgemäß durch ein Verfahren der eingangs beschriebenen Art gelöst, welches die folgenden Verfahrensschritte umfaßt:
- Übermitteln von den Aufstellungs- bzw. Betriebsort der Waage betreffenden Daten über das drahtgebundene oder drahtlose Telefonnetz vom Aufstellungs- bzw. Betriebsort zu einem Empfangsort;
- Bestimmen von dem Aufstellungs- oder Betriebsort zugeordneten Informationen über den Wert der Erdbeschleunigung am Aufstellungs- oder Betriebsort der Waage anhand der empfangenen Daten am Empfangsort;
- Ansteuern der über eine serielle Schnittstelle und ein Modem am Aufstellungs- oder Betriebsort an das Telefonnetz angeschlossenen Waage über das Telefonnetz und Übermitteln der bestimmten Informationen an den Rechner der Waage, wo sie in der Speichereinheit gespeichert werden.

Es wird also erfindungsgemäß das Telefonnetz zum Übermitteln von dem Aufstellungs- bzw. Betriebsort einer zu kalibrierenden Waage betreffenden oder kennzeichnenden Daten an einen Empfangsort verwendet. Beim Empfangsort kann es sich beispielsweise um den Sitz des Herstellers oder des Kundendienstes des Herstellers handeln, wo eine weitere Datenverarbeitung durchgeführt wird. Diese weitere Datenverarbeitung besteht darin, daß anhand der übermittelten Daten, welche unmittelbar oder über eine beliebige Codierung den Aufstellungs- bzw. Betriebsort der Waage kennzeichnen, Informationen über den Wert der Erdbeschleunigung am Ort der Waage bestimmt werden. Dies kann ansich unter Verwendung von vorgefertigten Listen bishin zu umfangreichsten Datenbanken, welche rechnergesteuert abgefragt werden, durchgeführt werden. Bei den auf diese Weise zu bestimmenden Informationen über den Wert der Erdbeschleunigung am Ort der Waage kann es sich entweder direkt um den g-Wert handeln oder aber um Korrekturwerte bzw. -faktoren des g-Werts, es ist jedoch auch möglich, daß zur rechnerischen Ermittlung des g-Werts Zahlenwerte aus der Datenbank gewissen Variablen zugeordnet werden, welche erst im Rechner der Waage zur Errechnung des g-Werts verwendet werden. Nachdem die vorstehend beschriebenen Informationen bestimmt wurden, werden sie wiederum über das Telefonnetz an den Aufstellungs- bzw. Betriebsort der Waage dem Rechner der Waage übermittelt, wo sie direkt oder nach einer weiteren Datenverarbeitung durch den Rechner in der Speichereinheit gespeichert werden. Es besteht also am Ort der Waage nicht die Möglichkeit einer Datenmanipulation. Selbst wenn die zunächst vom Ort der Waage an den Empfangsort übermittelten Daten gefälscht sind und daher nicht den wahren Aufstellungsort der Waage bezeichnen, so kann dies anhand der Telefonnummer, die ja für die Rückübermittlung der die Erdbeschleunigung betreffenden Informationen erforderlich ist, erkannt werden.

Somit wurde erfindungsgemäß eine Möglichkeit geschaffen, an jedem beliebigen Ort der Welt eine Nachkalibrierung einer Waage vorzunehmen, sofern ein Telefonanschluß zur Verfügung steht.

Im einfachsten Fall wird vom Aufstellungs- bzw. Betriebs- oder auch Verkaufsort der Waage, bei dem es sich bevorzugtermaßen um den Ort einer Handelsniederlassung des Herstellers handeln kann, beim Hersteller angerufen, und es werden dann die den Aufenthalts- bzw. Betriebsort der Waage betreffenden Daten einfach fernmündlich zum Hersteller bzw. Empfangsort geleitet. In weiterer Ausbildung der Erfindung wird jedoch vorgeschlagen, diese Daten unter Verwendung eines an das Telefonnetz angeschlossenen Modems vom Ort der Waage zum Empfangsort zu übermitteln. Irrtümer sind dann eher ausgeschlossen, und es besteht die Möglichkeit, am Ort der Waage rechnergesteuerte Einrichtungen vorzusehen, welche das Kalibrieren in großem Maßstab auf wirtschaftliche Art und Weise auszuführen gestatten.

Nach einem weiteren Erfindungsgedanken von besonderer Bedeutung handelt es sich bei den den Aufstellungs- bzw. Betriebsort der Waage betreffenden Daten um die Ortsnetzkennzahl des Telefonnetzes am Aufenthalts- bzw. Betriebsort. Anhand der über das Telefonnetz an den Empfangsort übermittelten Ortsnetzkennzahl, was auch allein durch die Anwahl eines am Empfangsort vorgesehenen PC's und entsprechende Software erreicht werden kann, kann eine vollautomatische bzw. freiprogrammierbare Prozedur gestartet werden. Rechnergesteuert werden die der betreffenden Ortsnetzkennzahl zugeordneten Informationen über den Wert der Erdbeschleunigung aus einer Datenbank abgefragt und über das Telefonnetz an den Rechner der Waage übermittelt.

Nach einer weiteren Erfindungsvariante werden außer den Daten, welche den Aufenthalts- bzw. Betriebsort der Waage betreffen, weitere Daten, wie zum Beispiel die Seriennummer der zu kalibrierenden Waage, an den Empfangsort übermittelt und dort geprüft. Hierzu kann die Seriennummer unter Verwendung eines Rechners am Empfangsort auf ihre Gültigkeit, d.h. daraufhin, ob unter dieser Nummer überhaupt eine Waage produziert wurde, geprüft werden, oder es kann festgestellt werden, ob für die betreffende Waage bereits eine Nachkalibrierung, insbesondere an einem anderen Ort, durchgeführt wurde.

Der Benutzer kann sich nach Durchführung der Kalibrierung jederzeit von der korrekten Datenübermittlung überzeugen, indem er über ein vorzugsweise vorzusehendes Anzeigegerät die vorzugsweise mitübermittelte und gespeicherte Ortsnetzkennzahl kontrolliert.

Die Erfindung betrifft desweiteren eine Waage zur Durchführung des vorstehend beschriebenen Verfahrens nach einem oder mehreren der Patentansprüche 1 bis 7, mit einem gewichtskraftbestimmenden Wägesystem, einem prozessorgesteuerten Rechner und mit einer Speichereinheit zum Speichern von die Erdbeschleunigung (g) betreffenden Informationen, die gekennzeichnet ist durch eine serielle Schnittstelle zum Anschluß an ein mit dem Telefonnetz zusammenwirkendes Modem und ein Rechnerprogramm zum Ansteuern dieses Modems.

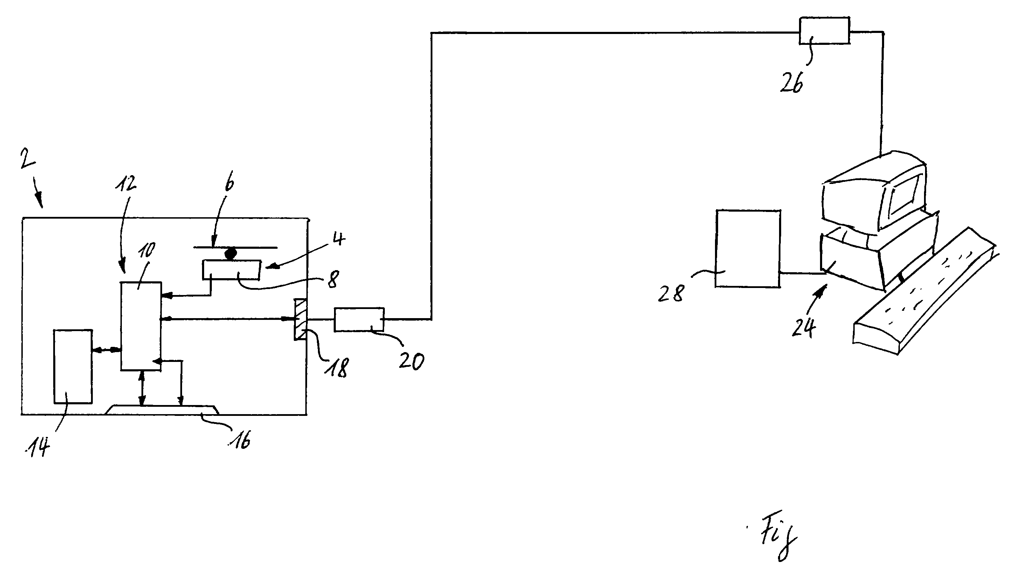

Weitere Merkmale, Einzelheiten und Vorteile der Erfindung ergeben sich aus der zeichnerischen Darstellung und nachfolgenden Beschreibung einer bevorzugten Variante des erfindungsgemäßen Verfahrens. In der Zeichnung zeigt die einzige Figur das Funktionsprinzip des erfindungsgemäßen Kalibrierverfahrens.

Die Figur zeigt in schematischer Darstellung eine Waage 2 mit einem Gewichtskraft bestimmenden Wägesystem 4, welches eine angedeutete Lastaufnahme 6 und einen die Gewichtskraft erfassenden Sensor 8 umfaßt. Nach einer Digitalisierung werden der gemessenen Gewichtskraft entsprechende elektrische Signale an die Recheneinheit 10 eines internen prozessorgesteuerten Rechners 12 gegeben und verarbeitet. Zur Meßwertverarbeitung wird aus einer Speichereinheit 14 des Rechners 12 der Wert der Erdbeschleunigung entnommen und unter Verwendung dieses Werts ein der gemessenen Gewichtskraft entsprechender Massenwert errechnet und auf der Anzeigeeinheit 16 zur Anzeige gebracht. Die Recheneinheit ist desweiteren mit einer seriellen Schnittstelle 18 verbunden, über welche die Waage 2 bzw. die zentrale Recheneinheit 10 über ein Modem 20 mit dem angedeuteten Telefonnetz 22 verbindbar ist.

Die soeben beschriebene Waage 2 kann sich an irgendeinem Telefonnetzanschluß irgendwo auf der Welt befinden und ist auf diese Weise mit einem Telefonanschluß an einer als Empfangsort bezeichneten Herstellerniederlassung oder Kundendienstzentrale oder dergleichen verbindbar. An diesem Empfangsort ist ein weiterer prozessorgesteuerter Rechner 24, vorzugsweise ein PC, über ein Modem 26 ebenfalls an das Telefonnetz 22 angeschlossen. Der Rechner 24 kann auf eine Datenbank 28 zugreifen, in der für vorzugsweise alle Orte mit einer bestimmten Ortsnetzkennzahl Informationen über den Wert der Erdbeschleunigung an diesem Ort gespeichert sind und abgerufen werden können. Wenn also die Waage 2 an ihrem Aufstellungs- oder Betriebsort kalibriert werden soll, so wird sie über ihre serielle Schnittstelle 18 und ein Modem 20 an das Telefonnetz 22 angeschlossen. Sodann wird beispielsweise durch ein bereits programmiertes Programm im Rechner 12 der Rechner 24 am Empfangsort angewählt und hierdurch eine vorzugsweise vollautomatische Prozedur gestartet. Nachdem die Telefonverbindung zwischen dem waageninternen Rechner 12 und dem Rechner 24 am Empfangsort hergestellt ist, wird die Ortsnetzkennzahl des Aufstellungs- bzw. Betriebsorts, von dem aus der Rechner 24 angewählt wurde, an den Empfangsort übermittelt und danach wird die Verbindung getrennt. Der Rechner 24 greift nun auf die Datenbank 28 zu und entnimmt die der betreffenden Ortsnetzkennzahl zugeordneten Informationen über den Wert der Erdbeschleunigung am Aufstellungs- bzw. Betriebsort der Waage 2. Diese Informationen können in der Form von geographischen Daten des Aufstellungs- bzw. Betriebsorts bestehen, es kann sich hierbei um zuvor berechnete Korrekturfaktoren für einen in der Waage bereits abgespeicherten Wert der Erdbeschleunigung handeln, oder in der Datenbank 28 ist bereits der Wert der Erdbeschleunigung am Aufstellungs- oder Betriebsort abgespeichert. Nach dem Zugriff auf die Datenbank 28 werden die entnommenen Informationen über das Modem 26 in das Telefonnetz 22 eingespeist und an die Telefonnummer, an der die Waage 2 bzw. das Modem 20 angeschlossen sind, gesandt und der zentralen Recheneinheit 10 des Rechners 12 in wiederum digitaler Form eingegeben. Sofern es sich bei den Informationen um geographische Daten, wie die geographische Breite, die Höhe über NN oder andere handelt, so wird hieraus der am Ort der Waage 2 herrschende Wert der Erdbeschleunigung in ansich bekannter Weise berechnet und dann in der Speichereinheit 14 abgelegt. Sofern bereits der Wert der Erdbeschleunigung am Ort der Waage über das Telefonnetz 22 übermittelt wird, kann dieser Wert unmittelbar an die Speichereinheit 14 weitergegeben werden. Durch den unmittelbaren "Dialog" zwischen dem Rechner 24 am Empfangsort und dem Rechner 12 in der Waage 2 am Aufstellungs- bzw. Betriebsort besteht für einen Benutzer keine Möglichkeit, in nicht bestimmungsgemäßer Weise Einfluß auf den Wert der Erdbeschleunigung zu nehmen.

## Patentansprüche

1. Verfahren zum Kalibrieren einer ein gewichtskraftbestimmendes Wägesystem (4) aufweisenden Waage (2) mit einem prozessorgesteuerten Rechner (12) und mit einer Speichereinheit (14) zum Speichern von die Erdbeschleunigung (g) betreffenden Informationen, die folgenden Verfahrensschritte umfassend:
- Übermitteln von den Aufstellungs- bzw. Betriebsort der Waage (2) betreffenden Daten über das drahtgebundene oder drahtlose Telefonnetz (22) vom Aufstellungs- bzw. Betriebsort zu einem Empfangsort;
- Bestimmen von dem Aufstellungs- oder Betriebsort zugeordneten Informationen über den Wert der Erdbeschleunigung am Aufstellungs- oder Betriebsort der Waage (2) anhand der empfangenen Daten am Empfangsort;
- Ansteuern der über eine serielle Schnittstelle (18) und ein Modem (20) am Aufstellungs- oder Betriebsort an das Telefonnetz (22) angeschlossenen Waage über das Telefonnetz und Übermitteln der bestimmten Informationen vom Empfangsort an den Rechner (12) der Waage (2) am Aufstellungs- bzw. Betriebsort, wo sie in der Speichereinheit (14) gespeichert werden.

2. Verfahren nach Anspruch 1, dadurch gekennzeichnet, daß die den Aufstellungs- bzw. Betriebsort der Waage (2) betreffenden Daten unter Verwendung eines an das Telefonnetz angeschlossenen Modems (20) zum Empfangsort übermittelt werden.

3. Verfahren nach Anspruch 1 oder 2, dadurch gekennzeichnet, daß es sich bei den den Aufstellungs- bzw. Betriebsort der Waage (2) betreffenden Daten um die Ortsnetzkennzahl des Telefonnetzes am Aufstellungs- bzw. Betriebsort handelt.

4. Verfahren nach einem der vorstehenden Ansprüche, dadurch gekennzeichnet, daß vom Aufstellungs- bzw. Betriebsort der Waage weitere Daten, wie z.B. die Seriennummer der zu kalibrierenden Waage, an den Emfangsort übermittelt und dort geprüft werden.

5. Verfahren nach Anspruch 4, dadurch gekennzeichnet, daß anhand der weiteren Daten ermittelt wird, ob die betreffende Waage schon einmal nachkalibriert wurde.

6. Verfahren nach einem der vorstehenden Ansprüche, dadurch gekennzeichnet, daß bei der Übermittlung der bestimmten Informationen vom Empfangsort an den Rechner (12) der Waage (2) zusätzliche Daten, insbesondere die Ortsnetzkennzahl des Aufstellungs- oder Betriebsorts, mit übermittelt werden, die es erlauben, am Aufstellungs- bzw. Betriebsort der Waage (2) zu kontrollieren, für welchen Ort die Waage kalibriert wurde.

7. Verfahren nach Anspruch 6, dadurch gekennzeichnet, daß die zusätzlich übermittelten Daten in der Speichereinheit (14) gespeichert und so jederzeit an der Waage (2) abgefragt werden können.

8. Waage zur Durchführung des Verfahrens nach einem oder mehreren der vorstehenden Ansprüche, mit einem gewichtskraftbestimmenden Wägesystem (4), einem prozessorgesteuerten Rechner (12) und mit einer Speichereinheit (14) zum Speichern von die Erdbeschleunigung (g) betreffenden Informationen, gekennzeichnet durch eine serielle Schnittstelle (18) zum Anschluß an ein Modem (20) und ein Rechnerprogramm zum Ansteuern des Modems (20).

9. Waage nach Anspruch 8, gekennzeichnet durch eine Anzeigeeinheit (16), auf der die den Aufstellungs- bzw. Betriebsort der Waage (2) betreffenden Daten, vorzugsweise die Ortsnetzkennzahl, zur Anzeige gebracht werden kann.
